(19) Europäisches Patentamt
European Patent Office
Office européen des brevets

(11) **EP 4 637 022 A1**

(12) **EUROPÄISCHE PATENTANMELDUNG**

(43) Veröffentlichungstag:
   **22.10.2025   Patentblatt 2025/43**

(21) Anmeldenummer: **25169964.1**

(22) Anmeldetag: **11.04.2025**

(51) Internationale Patentklassifikation (IPC):
   *H02P 6/15* (2016.01)      *H02M 1/38* (2007.01)
   *H02P 23/14* (2006.01)     *H02P 27/08* (2006.01)

(52) Gemeinsame Patentklassifikation (CPC):
   **H02P 27/08; H02M 1/38; H02M 1/385; H02P 6/15;
   H02P 23/14**

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **GE KH LA MA MD TN**

(30) Priorität:  **17.04.2024   DE 102024203566**

(71) Anmelder: **Brose Fahrzeugteile SE & Co.
   Kommanditgesellschaft, Würzburg
   97076 Würzburg (DE)**

(72) Erfinder: **SCHWARZKOPF, Johannes
   97828 Marktheidenfeld (DE)**

(74) Vertreter: **FDST Patentanwälte
   Nordostpark 16
   90411 Nürnberg (DE)**

(54) **VERFAHREN ZUM BETREIBEN EINES PULSWEITENMODULIERTEN ELEKTROMOTORS**

(57)   Die Erfindung betrifft ein Verfahren zum Betreiben eines pulsweitenmodulierten Elektromotors (4), bei welchem im Zuge der Pulsweitenmodulation zumindest ein Brückenzweig (26) mit einem High-Side-Schalter (44) und mit einem Low-Side-Schalter (46) angesteuert wird, und bei welchem zwischen einem Ausschaltvorgang des einen Schalters (44, 46) und einem Einschaltvorgang des anderen Schalters (46, 44) eine Totzeit vorgesehen ist, welche sich aus einer sich im Motorbetrieb verändernden Hardware-Totzeitdauer ($T_{LSoff}$, $T_{HSon}$, $T_{HSoff}$, $T_{LSon}$) und einer einstellbaren Software-Totzeitdauer ($T_{SWon}$, $T_{SWoff}$) zusammensetzt, wobei die Schaltzeitpunkte (T2, T4, T6, T8) für die die Totzeit begrenzenden Schaltvorgänge erfasst werden, wobei in Abhängigkeit der erfassten Schaltzeitpunkte (T2, T4, T6, T8) die Software-Totzeit ($T_{SWon}$, $T_{SWoff}$) verändert wird.

Fig. 4

## EP 4 637 022 A1

**Beschreibung**

Die Erfindung betrifft ein Verfahren zum Betreiben eines pulsweitenmodulierten Elektromotors, bei welchem im Zuge der Pulsweitenmodulation zumindest ein Brückenzweig mit einem High-Side-Schalter und mit einem Low-Side-Schalter angesteuert wird, und bei welchem zwischen einem Ausschaltvorgang des einen Schalters und einem Einschaltvorgang des anderen Schalters eine Totzeit vorgesehen ist, welche sich aus einer sich im Motorbetrieb verändernden Hardware-Totzeitdauer und einer einstellbaren Software-Totzeitdauer zusammensetzt. Die Erfindung betrifft weiterhin eine elektrische Maschine und eine Software auf einem Datenträger.

Elektromotorisch an- oder betriebene Verstellsysteme als Kraftfahrzeugkomponenten, wie beispielsweise Fensterheber, Sitzverstellungen, Tür- und Schiebedachantriebe oder Kühlerlüfterantriebe sowie Pumpen und Innenraumgebläse weisen typischerweise einen elektrischen Antrieb mit einem gesteuerten Elektromotor auf. Für solche elektromotorische Antriebe werden zunehmend häufig sogenannte bürstenlose Elektromotoren (bürstenloser Gleichstrommotor, BLDC-Motor) eingesetzt, bei denen die verschleißanfälligen Bürstenelemente eines starren (mechanischen) Kommutators durch eine elektronische Kommutierung des Motorstroms ersetzt sind. Hierzu ist der Elektromotor in der Regel über eine Brückenschaltung an einen Zwischenkreis angeschlossen.

Der mehrphasige Motorstrom wird in der Regel durch eine Pulsweitenmodulation (PWM) der den Elektromotor speisenden Brückenschaltung erzeugt. Bei der PWM wird die Breite (Dauer) der Spannungsimpulse variiert, um die durchschnittliche Spannung und somit die Energie, die an den Elektromotor abgegeben wird, zu steuern. Dies geschieht durch ein vorgegebenes Taktungsschema, bei welchem die Halbleiterschalter der Brückenschaltung in einem rhythmischen Muster zwischen einem leitenden und einem sperrenden Zustand wechseln, was eine effiziente und genaue Kontrolle der Motorleistung ermöglicht.

In der Praxis wird ein Tastverhältnis (engl.: Duty Cycle) der PWM genutzt, um die durchschnittliche Leistung, die an eine Last abgegeben wird, zu steuern, ohne die Spannung direkt zu ändern. Durch Anpassen der Pulsweite (und somit des Tastverhältnisses) kann die effektive Spannung, die über die Zeit gesehen an dem Elektromotor anliegt, fein justiert werden.

Die Brückenschaltung weist eine der Anzahl der Motorphasen entsprechenden Anzahl von Brückenzweigen (Halbbrücken) auf. Jeder Brückenzweig weist hierbei einen High-Side-Schalter und einen Low-Side-Schalter auf. Unter einem High-Side-Schalter wird insbesondere ein Schalter verstanden, welcher eine positive oder hohe Versorgungsspannung schaltet. Der High-Side-Schalter ist also schaltungstechnisch oberhalb der durch die Motorphasen gebildeten Last geschaltet. Entsprechend wird unter einem Low-Side-Schalter insbesondere ein Schalter verstanden, welcher eine negative oder niedrige Versorgungsspannung schaltet. Der Low-Side-Schalter ist also schaltungstechnisch unterhalb der durch die Motorphasen gebildeten Last geschaltet.

Die High-Side-Schalter und Low-Side-Schalter sind regelmäßig als (Leistungs-)Halbleiterschalter, insbesondere als (Leistungs-)Transistoren, beispielsweise als IGBTs (Insulated-Gate Bipolar Transistor) oder SicMOS MOSFET GaN (SiC: Silicon Carbide, MOS: Metall Oxide Semiconductor, FET: Field Effect Transistor, GaN: Gallium Nitride), ausgeführt, und weisen hierbei jeweils eine integrierte Freilaufdiode (Body-Diode) auf. Unter "integriert" ist hierbei insbesondere zu verstehen, dass die Freilaufdiode Teil des Halbleiterschalters ist, oder mit diesem zusammen ein gemeinsames Bauteil bildet. Bei einem MOSFET entsteht die Freilaufdiode beispielsweise fertigungsbedingt innerhalb der NPN (bzw. PNP) Struktur. Bei einem IGBT hingegen wird ein separates Bauteil benötigt, um diese Funktion darzustellen. Integriert bedeutet hierbei insbesondere, dass der IGBT und die Freilaufdiode in einem gemeinsamen Gehäuse aufgenommen sind, und als ein gemeinsames Bauteil verbaut/verschaltet werden.

Beim PWM-Betrieb muss sichergestellt werden, dass beide Schalter eines Brückenzweigs nicht gleichzeitig leitend geschaltet sind. Auch nach einem Ausschalten des Schalters fließt aufgrund der Motorinduktivität ein Strom über die Freilaufdioden.

Im Zuge der PWM wird daher beim Umschalten zunächst der aktive Schalter ausgeschaltet und anschließend der andere eingeschaltet. Es muss zu jeder Zeit sichergestellt sein, dass ein Schalter erst angeschaltet wird, wenn der komplementäre Schalter ausgeschaltet ist. Hierfür ist eine Totzeit vorgesehen, in welcher beide Schalter ausgeschaltet sind, und der Elektromotor nicht kommutiert werden kann, so dass das Kurzschließen der Zwischenkreisspannung verhindert ist. Der durch die Induktivität des Elektromotors getriebene Strom fließt je nach Stromrichtung während dieser Zeit durch die (parasitäre oder integrierte) Freilaufdiode zur positiven oder negativen Versorgungsspannung. Dies erhöht die elektrischen Verluste und kann negative akustische Auswirkungen zur Folge haben. Je größer oder länger die vorgehaltene Totzeit ist, desto ineffizienter wird die elektrische Maschine im (Normal-)Betrieb. Daher soll die Totzeit so klein wie möglich gehalten werden.

Unter einer "Totzeit" (engl.: Deadtime) ist hier und im Folgenden insbesondere jene Zeitspanne oder Zeitdauer während der Umschaltung zu verstehen, in welcher bei der Brückenschaltung beziehungsweise bei dem Brückenzweig weder ein High-Side-Schalter noch ein Low-Side-Schalter geschlossen (leitend geschaltet) ist.

Die Totzeit setzt sich hierbei regelmäßig aus einer hardwarebedingten Hardware-Totzeitdauer und einer softwaretechnisch hinterlegten und einstellbaren Software-Totzeitdauer zusammen.

Die Hardware-Totzeitdauer entspricht hierbei im Wesentlichen der hardwarebedingten Verzögerung eines Schaltvorgangs. Wenn beispielsweise ein als MOSFET ausgeführter Schalter eingeschaltet wird, wird beispielsweise von einem (Mikro-)Controller ein Signal an einen PWM-Treiber geschickt, welcher daraufhin seinen Ausgang auf High setzt und einen Gateanschluss des Schalters ansteuert. Anschließend wird das Gate des MOSFETs durch den Strom aufgeladen, bis der Schalter tatsächlich einschaltet. Aufgrund dieser Hardwareverzögerung kommt es zu einem zeitlichen Versatz zwischen einem gewünschten Schaltzeitpunkt und dem tatsächlichen Schaltzeitpunkt. Diese Schaltverzögerung oder Hardware-Totzeit kann hierbei während des Motorbetriebs, beispielsweise aufgrund von Temperaturschwankungen, Alterung, oder Toleranzen der Hardware-Bauteile, variieren. Insbesondere können sich die Hardware-Totzeiten für den Ein- und Ausschaltvorgang unterscheiden. Weiterhin können die Hardware-Totzeiten für den High-Side- und Low-Side-Schalter sowie zwischen Brückenzweigen variieren.

Die Software-Totzeit ist eine hinterlegte oder programmierte zeitliche Verzögerung, welche im Zuge der PWM berücksichtigt wird, und welche derart dimensioniert ist, dass die Totzeit, also die Summe aus der hinterlegten Software-Totzeit und der veränderlichen Hardware-Totzeit, stets größer als eine Minimaltotzeit ist, so dass Kurzschlüsse oder Querströme betriebssicher vermieden werden. Typischerweise ist die Software-Totzeit hierbei überdimensioniert, so dass auch bei einer Veränderung der Hardware-Totzeit stets sichergestellt ist, dass die Mindesttotzeit nicht unterschritten wird.

Der Erfindung liegt die Aufgabe zugrunde, ein besonders geeignetes Verfahren zum Betrieb eines pulsweitenmodulierten Elektromotors anzugeben. Der Erfindung liegt weiterhin die Aufgabe zugrunde, eine besonders geeignete elektrische Maschine und eine besonders geeignete Software anzugeben.

Hinsichtlich dem Verfahren wird die Aufgabe mit den Merkmalen des Anspruchs 1 und hinsichtlich der elektrischen Maschine mit den Merkmalen des Anspruchs 9 sowie hinsichtlich der Software mit den Merkmalen des Anspruchs 10 erfindungsgemäß gelöst. Vorteilhafte Ausführungen und Weiterbildungen sind Gegenstand der abhängigen Ansprüche (Unteransprüche).

Dabei gelten die Ausführungen im Zusammenhang mit dem Verfahren sinngemäß auch für die elektrische Maschine und/oder die Software und umgekehrt. Sofern nachfolgend Verfahrensschritte beschrieben werden, ergeben sich vorteilhafte Ausgestaltungen für die elektrische Maschine insbesondere dadurch, dass diese ausgebildet ist, einen oder mehrere dieser Verfahrensschritte auszuführen.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Das erfindungsgemäße Verfahren ist zum Betrieb eines pulsweitenmodulierten Elektromotors, also eines Elektromotors welcher mittels einer Pulsweitenmodulation (PWM) betrieben wird, vorgesehen, sowie dafür geeignet und ausgestaltet. Der insbesondere mehrphasige und bürstenlose Elektromotor ist hierbei über einen an einem (Gleichspannungs-)Zwischenkreis angeschlossenen Wechselrichter angesteuert. Hierzu weist der Wechselrichter eine (Steuer-)Elektronik mit Logikbauteilen und einem PWM-Treiber auf, welche eine Brückenschaltung mit Leistungsbauteilen (High-Side-Schalter, Low-Side-Schalter) zur Erzeugung eines Motorstroms/einer Motorspannung (Phasenspannung) ansteuern.

Der Zwischenkreis weist einen Zwischenkreiskondensator (Zwischenkreiskapazität) auf, welcher zwischen einem High-Pfad und einem Low-Pfad verschaltet ist. Der High-Pfad ist hierbei an eine positive oder hohe Versorgungspannung und der Low-Pfad an eine negative oder niedrige Versorgungsspannung angeschlossen. Der Zwischenkreis ist mit einem die Versorgungsspannung bereitstellenden Energiespeicher, beispielsweise einer Hochvolt- oder Fahrzeugbatterie, verbunden.

Die Brückenschaltung des Wechselrichters weist eine der Anzahl der Motorphasen entsprechenden Anzahl von Brückenzweigen (Halbbrücken) auf. Jeder Brückenzweig weist hierbei einen High-Side-Schalter (HS-Schalter) und einen Low-Side-Schalter (LS-Schalter) auf. Die HS- und LS-Schalter sind in Reihe geschaltet, wobei ein Mittelpunkt zwischen den Schaltern als Ausgangs- oder Abgriffspunkt für die Motorspannung vorgesehen ist.

Die HS-Schalter und LS-Schalter sind vorzugsweise als (Leistungs-)Halbleiterschalter, insbesondere als (Leistungs-)Transistoren, beispielsweise als IGBTs oder MOSFET, ausgeführt, und weisen hierbei jeweils eine integrierte oder externe Freilaufdiode (Body-Diode) auf.

Bei einem Umschaltvorgang, also zwischen einem Ausschaltvorgang des einen Schalters und einem Einschaltvorgang des anderen Schalters, ist eine Totzeit zur Vermeidung von Kurzschlüssen und Querströmen vorgesehen. Die Totzeit setzt sich hierbei aus einer sich im Motorbetrieb verändernden Hardware-Totzeitdauer und einer einstellbaren Software-Totzeitdauer zusammen. Insbesondere ist die Totzeit durch die Summe der Hardware-Totzeitdauer und der Software-Totzeitdauer gegeben.

Erfindungsgemäß werden die Schaltzeitpunkte für die die Totzeit begrenzenden Schaltvorgänge erfasst oder gemessen, wobei in Abhängigkeit der Schaltzeitpunkte die Software-Totzeit verändert wird. Es werden also die Schaltzeitpunkte zur Laufzeit ermittelt, um die Software-Totzeit beispielsweise möglichst optimal anzupassen und den Einfluss der Totzeit bestmöglich zu kompensieren. Dadurch ist ein besonders geeignetes Verfahren zum Betrieb eines pulsweitenmodulierten Elektromotors realisiert.

Unter einem "Schaltzeitpunkt" ist hier und im Folgenden insbesondere der spezifische Zeitpunkt innerhalb eines Modulationszyklus zu verstehen, zu dem eine Änderung im Zustand eines Schalters tatsächlich initiiert wird.

Das Verfahren kann hierbei sowohl für einen Umschaltvorgang von High auf Low oder umgekehrt durchgeführt werden. Weiterhin kann das Verfahren auch für verschiedene Brückenzweige parallel durchgeführt werden. Beispielsweise wird das Verfahren für jeden Umschaltvorgang der Brückenschaltung durchgeführt.

Die Ermittlung der Messwerte kann zu ausgewählten Zeiten, beispielsweise beim Hochfahren (Power up), bei der Herstellung, insbesondere End of Line (EOL), oder während der gesamten Nutzungsdauer erfolgen. Mit anderen Worten kann das Verfahren im Zuge einer Kalibrierung des Elektromotors, bei einem Anfahren, oder während des Motorbetriebs durchgeführt werden.

In einer bevorzugten Ausführung wird anhand der erfassten Schaltzeitpunkte ein Schwellwertvergleich mit einem Schwellwert durchgeführt, und die Software-Totzeit in Abhängigkeit des Schwellwertvergleichs verändert. Insbesondere wird die Software-Totzeit als Einregelgröße für den Motor- beziehungsweise PWM-Betrieb verwendet. Mit anderen Worten wird die Software-Totzeit anhand des Schwellwertvergleichs geregelt.

Unter einer "Einregelgröße" ist hier und im Folgenden insbesondere ein Parameter oder eine Messgröße zu verstehen, die in einem Regelkreis zur Anpassung und Kontrolle der Pulsweitenmodulation (PWM) verwendet wird. Bei der Bestimmung der Einregelgröße und der Berechnung der Zeiten (z.B. der Hardware- und Software-Totzeiten) könne Verzögerungszeiten wie beispielsweis die Sample & Hold-Zeit berücksichtigt werden.

In einer möglichen Anwendung, wird mittels der Regelung der Software-Totzeit eine Totzeitkompensation oder Totzeitoptimierung im PWM-Betrieb realisiert. In einer denkbaren Ausgestaltung wird aus den erfassten Schaltzeitpunkten eine Ist-Totzeitdauer bestimmt, und ein Schwellwertvergleich der Ist-Totzeitdauer mit einer hinterlegten Soll-Totzeitdauer, insbesondere einer Minimaltotzeit, durchgeführt. In Abhängigkeit des Schwellwertvergleichs wird die Software-Totzeit verändert oder geregelt.

In einer geeigneten Ausgestaltung wird die Software-Totzeit hierbei insbesondere minimiert. Die Kenntnis der Schaltzeiten ermöglicht eine Minimierung der Totzeit und eine bestmögliche Kompensation der Totzeit. Dies wiederum verbessert die Akustik, die Verlustleistung, und die Eigenerwärmung des Elektromotors im Motorbetrieb. Die Software-Totzeit wird hierbei derart minimiert, dass die Summe aus Software-Totzeit und Hardware-Totzeit stets größer als eine Minimaltotzeit zur Gewährleistung einer Kurschlussvermeidung ist. Die Minimaltotzeit ist hierbei der Schwellwert beziehungsweise die Soll-Totzeitdauer mit welcher die Ist-Totzeitdauer verglichen wird. Die der Wert für die Software-Totzeit wird hierbei insbesondere reduziert, wenn die Ist-Totzeitdauer größer als die Soll-Totzeitdauer ist. Beispielsweise wird die Software-Totzeit schrittweise oder sukzessive, zum Beispiel in 10 ns (Nanosekunden) Schritten, reduziert, und somit die Totzeit während der PWM optimiert. Dadurch ist eine dynamische Totzeitkompensation während der Laufzeit des Elektromotors ermöglicht.

Die sich im Betrieb verändernde Hardware-Totzeit hängt beispielsweise auch mit einer Veränderung einer gewünschten Pulsdauer der PWM-Pulse zusammen. Insbesondere die hardwarebedingten Verzögerungen beim Einschaltvorgang und/oder Ausschaltvorgang der Schalter können dazu führen, dass eine tatsächliche Ist-Pulsdauer von der gewünschten Soll-Pulsdauer abweicht. In einer weiteren möglichen Anwendung wird daher die Einstellung der Software-Totzeit dazu genutzt oder verwendet, die Ist-Pulsdauer an eine Soll-Pulsdauer anzupassen. Hierzu wird anhand der erfassten Schaltzeitpunkten von aufeinanderfolgenden Ein- und Ausschaltvorgängen eine Ist-Pulsdauer für einen Signalpuls (PWM-Puls) der Pulsweitenmodulation bestimmt. Anschließend wird ein Schwellwertvergleich der Ist-Pulsdauer mit einer Soll-Pulsdauer durchgeführt. Die Soll-Pulsdauer ist hierbei der Schwellwert, wobei die Soll-Pulsdauer insbesondere diejenige Pulsdauer ist, welche von der Pulsweitenmodulation umgesetzt werden soll. Die Software-Totzeit wird in dieser Anwendung in Abhängigkeit des Schwellwertvergleichs verändert oder geregelt, so dass die Ist-Pulsdauer der Soll-Pulsdauer entspricht oder sich dieser zumindest annähert.

Die ermittelten (Rest-)Totzeiten können somit auch dazu genutzt werden, die Ansteuerpulse so zu verändern, dass ein gewünschter Puls an dem Phasenkontakt anliegt. Liegt beispielsweise eine Verzögerung von 1000 ns beim Wechsel zur positiven Phasenspannung und eine Verzögerung von 600 ns beim Wechsel zur negativen Spannung vor, so ist der Puls an der Phase um 400 ns kürzer als der Ansteuerpuls. Mit anderen Worten ist die Ist-Pulsdauer um 400 ns kürzer als die Soll-Pulsdauer. Wird der Ansteuerpuls gegenüber dem ursprünglichen Wunschpuls um 400 ns verlängert, so entspricht die Phasenspannungsdauer der ursprünglichen Wunschpulsdauer. Wird darüber hinaus die positive Flanke und die negative Flanke verschoben, so hat der Puls nicht nur die Wunschdauer, sondern auch die Wunschlage.

Vorzugsweise wird anhand der gemessenen Totzeit die Totzeitkompensation angepasst, so dass der erzeugte Puls möglichst nahe dem Wunschpuls kommt.

Zur Ermittlung oder Messung der Schaltzeitpunkte sind verschiedene Möglichkeiten oder Variationen denkbar.

In einer ersten Ausführung werden zur Erfassung eines Schaltzeitpunkts beispielsweise ein freilaufender Zeitgeber (Timer) und eine Referenzgröße verwendet, wobei ein Zählerstand des Zeitgebers kopiert und ausgewertet wird, wenn eine gemessene Motorgröße des Elektromotors das Niveau der Referenzgröße kreuzt. Die Motorgröße ist hierbei insbesondere eine erzeugte Phasenspannung für den Elektromotor, wobei die Referenzgröße eine entsprechende Referenzspannung ist. Die Referenzspannung ist beispielsweise die Hälfte der Summe aus der positiven und negativen Versorgungsspannung (0,5×HS-Spannungsniveau + 0,5×LS-Spannungsniveau). Kreuzt die Phasenspannung die Referenzspannung, so wird der Zählerstand des freilaufenden Zeitgebers kopiert und anschließend ausgewertet.

In einer weiteren Ausführung wird eine analoge Messung der Motorgröße durchgeführt. Hierzu wird insbesondere eine iterative Erfassung oder Messung eines Schaltzeitpunkts durchgeführt, indem zu einem erwarteten Schaltzeitpunkt eine Motorgröße des Elektromotors gemessen wird, und in Abhängigkeit davon der Schaltzeitpunkt verändert wird.

Bei einer analogen Phasenspannungsmessung wird somit zu dem erwarteten Schaltzeitpunkt die Phasenspannung gemessen, und je nach Messwert die Schaltzeit angepasst. Entsprechend wird bei einer analogen Phasenstrommessung der Phasenstrom zu dem erwarteten Schaltzeitpunkt gemessen, und je nach Messwert die Schaltzeit angepasst. Die Messung des Phasenstroms kann sowohl mit Hilfe eines Summenshunts als auch mit Hilfe eines Shunts für jede einzelne Phase erfolgen.

Alternativ zu einer einzelnen Messung in den vorherigen Varianten können auch Mehrfachmessungen je Schaltvorgang erfolgen.

Da der Schaltvorgang kontinuierlich erfolgt, kann in einer möglichen Weiterbildung auch der Schwellwert auf dem geregelt wird variiert werden. Wird beispielsweise als Schwellwert die Mitte der beiden Versorgungsspannungen genommen, so ist hier zwar der Schaltvorgang noch nicht abgeschlossen, jedoch ist dieser Wert beispielsweise für die Totzeitkompensation gut geeignet. Für ein sicheres Schalten wird vorzugsweise noch eine Konstante addiert.

Beispielsweise erfolgen die Befehle zum Ausschalten des LS-Schalters zu einem Zeitpunkt T1. Fließt der Strom vom Elektromotor in die Elektronik, so ist die Phasenspannung bei vollständig ausgeschalteten LS-Schalter nahe der positiven Versorgungsspannung. Wird als Messschwelle der Mittelwert der Versorgungsspannung gewählt, so ist zu diesem Zeitpunkt (T2) der Schaltvorgang nicht vollständig abgeschlossen. Der HS-Schalter darf erst zu einem späteren Zeitpunkt (T2+Konstante) leiten. Für die sichere Totzeit wird dementsprechend die Summe mit der Konstante berücksichtigt. Messtechnisch ist jedoch der Zeitpunkt T2 einfach und sicher ermittelbar und somit für die Kompensation besser geeignet.

Wenn als Schwellwert ein Spannungswert verwendet wird, also wenn der Schwellwert eine Schwellwertspannung ist, gibt es verschiedene Möglichkeiten die Spannungshöhe oder das Spannungsniveau des Schwellwerts zu variieren.

Eine erste Möglichkeit ist durch folgende Formel ausdrückbar

$$U_{SW} = a \times U_{HS} + (1 - a) \times U_{LS} \,,$$

wobei Usw das Schwellwertspannungsniveau, $U_{HS}$ das Spannungsniveau der positiven Versorgungsspannung, $U_{LS}$ das Spannungsniveau der negativen Versorgungsspannung, und a ein Zahlenwert zwischen Null (0) und Eins (1) ist.

Eine weitere Möglichkeit ist beispielsweise gegeben durch

$$U_{SW} = U_{HS} - \Delta \,,$$

wobei $\Delta$ ein Abstandswert ist, welcher einen Wert zwischen 0 und der Differenz zwischen der positiven Versorgungsspannung und der negativen Versorgungsspannung aufweist ($\Delta \in \{0; U_{HS}\text{-}U_{LS}\}$).

Entsprechend ist eine weitere Möglichkeit zur Veränderung der Schwellwertspannung Usw durch

$$U_{SW} = U_{LS} + \Delta \,,$$

gegeben.

Alternativ ist auch eine feste oder unveränderliche Spannungshöhe für die Schwellwertspannung Usw denkbar.

Die Werte für die Schwellwertspannung Usw können auch für den Einschaltvorgang und den Ausschaltvorgang unterschiedlich gewählt werden.

Wenn als Schwellwert ein Stromwert verwendet wird, also wenn der Schwellwert ein Schwellwertstrom ist, gibt es entsprechend verschiedene Möglichkeiten die Stromhöhe oder den Stromwert des Schwellwerts zu variieren.

Eine Möglichkeit ist durch folgende Formel ausdrückbar

$$I_{SW} = a \times I_{HS} + (1 - a) \times I_{LS} \,,$$

wobei Isw das Schwellwertstrom, $I_{HS}$ der Stromwert der nach dem Sprung, also nach dem Einschaltvorgang, $I_{LS}$ der Stromwert der vor dem Sprung, also vor dem Einschaltvorgang, und a ein Zahlenwert zwischen Null (0) und Eins (1) ist.

Eine weitere Möglichkeit ist beispielsweise gegeben durch

$$I_{SW} = I_{HS} - \Delta ,$$

wobei $\Delta$ ein Abstandswert ist, welcher einen Wert zwischen 0 und der Differenz zwischen dem Stromwerten vor und nach dem Sprung aufweist ($\Delta \in \{0; I_{HS}\text{-}I_{LS}\}$).

Entsprechend ist eine weitere Möglichkeit zur Veränderung des Schwellwertstroms Isw durch

$$U_{SW} = I_{LS} + \Delta ,$$

gegeben.

Die Werte für den Schwellwertstroms Isw können auch für den Einschaltvorgang und den Ausschaltvorgang unterschiedlich gewählt werden.

Sind die Stromdifferenzen ($I_{HS}\text{-}I_{LS}$) nicht ausreichend für eine sichere Erkennung kann die Ermittlung pausiert werden. Die Stromdifferenz wird also beispielsweise mit einem hinterlegten Differenzschwellwert verglichen, und die Ermittlung des Schwellwertstroms Isw pausiert, wenn die Stromdifferenz den Differenzschwellwert erreicht oder unterschreitet. In diesem Falle wird beispielsweise der zuletzt bestimmte Schwellwertstroms Isw verwendet, bis die Stromdifferenz den Differenzschwellwert wieder überschreitet. Wenn der Stromunterschied zwischen den beiden Schaltzuständen nicht ausreichend hoch ist, so wird vorzugsweise keine Messung vorgenommen. Die Totzeiten werden somit nicht angepasst, bis wieder ein Mindestunterschied vorhanden ist. Besteht die Gefahr, dass sich die Totzeit während dieser Zeit verändert, so kann alternativ während dieser Zeit die Totzeit (langsam) erhöht werden.

Die erfindungsgemäße elektrische Maschine ist insbesondere als ein elektromotorischer Antrieb in einem Kraftfahrzeug vorgesehen sowie dafür geeignet und eingerichtet. Grundsätzlich ist die Anwendung hierbei jedoch nicht auf den Automobilbereich eingeschränkt.

Die elektrische Maschine weist einen pulsweitenmodulierten und mehrphasigen Elektromotor auf, welcher bürstenlos mit einem Stator und mit einem gegenüber diesem rotierbar gelagerten Rotor ausgeführt ist.

Die elektrische Maschine weist weiterhin eine mit dem Elektromotor verbundene oder gekoppelte Brückenschaltung und einen Controller, das bedeutet ein Steuergerät, auf. Die Brückenschaltung ist hierbei vorzugsweise Teil eines Stromrichters, insbesondere eines Wechselrichters. Der Controller kann beispielsweise Teil des Stromrichters oder Teil einer externen Steuereinheit (engl.: Electronic Control Unit, ECU) sein. Der Stator weist hierbei eine Anzahl von Phasenwicklungen auf, welche einerseits an die Brückenschaltung geführt, und andererseits beispielsweise in einem gemeinsamen Verknüpfungspunkt (Sternpunkt) in Sternschaltung verschaltet sind.

Der Motorbetrieb des Elektromotors ist durch den Controller gesteuert und/oder geregelt. Der Controller ist hierbei allgemein - programm- und/oder schaltungstechnisch - zur Durchführung des vorstehend beschriebenen Verfahrens geeignet und eingerichtet. Der Controller ist somit konkret dazu eingerichtet, eine Pulsweitenmodulation des Elektromotors zu steuern und/oder zu regeln. Der Controller ist weiterhin dazu eingerichtet die Schaltzeitpunkte für die die Totzeit begrenzenden Schaltvorgänge zu erfassen und auszuwerten, wobei in Abhängigkeit der Schaltzeitpunkte die, insbesondere im Controller hinterlegte, Software-Totzeit verändert wird.

In bevorzugter Ausgestaltung ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Benutzer - bei Ausführung der Betriebssoftware in dem Mikrocontroller automatisch Durchgeführt wird.

Der Controller kann im Rahmen der Erfindung alternativ auch durch ein nicht-programmierbares elektronisches Bauteil, zum Beispiel einen ASIC (anwendungsspezifischer integrierter Schaltkreis), gebildet sein, in dem die Funktionalität zur Durchführung des Verfahrens mit schaltungstechnischen Mitteln implementiert ist.

Die mit dem Verfahren betriebene elektrische Maschine weist somit eine besonders effektiven Motorbetrieb auf. Insbesondere ist es somit möglich, die Software-Totzeit während der Laufzeit des Elektromotors optimal anzupassen und den Einfluss bestmöglich zu kompensieren.

Ein zusätzlicher oder weiterer Aspekt der Erfindung sieht eine Software auf einem Medium oder Datenträger zur Durchführung oder Ausführung des vorstehend beschriebenen Verfahrens vor. Dies bedeutet, dass die Software auf einem Datenträger hinterlegt ist, und zur Ausführung des vorstehend beschriebenen Verfahrens vorgesehen, sowie dafür geeignet und ausgestaltet ist. Dadurch ist eine besonders geeignete Software für den Betrieb eines Elektromotors realisiert, mit welcher die Funktionalität zur Durchführung des erfindungsgemäßen Verfahrens programmtechnisch implementiert wird. Die Software ist somit insbesondere eine Betriebssoftware (Firmware), wobei der Datenträger beispielsweise ein Datenspeicher des Controllers ist.

Nachfolgend wird ein Ausführungsbeispiel der Erfindung anhand einer Zeichnung näher erläutert. Darin zeigen in schematischen und vereinfachten Darstellungen:

Fig. 1 eine elektrische Maschine mit einer Stromquelle und mit einem Elektromotor sowie mit einem dazwischen verschalteten Stromrichter,

Fig. 2 drei Phasenwicklungen eines dreiphasigen Elektromotors der Maschine in Sternschaltung,

Fig. 3 ein Brückenmodul einer Brückenschaltung des Stromrichters zur Ansteuerung einer Phasenwicklung des Elektromotors,

Fig. 4 ein Ersatzschaltbild für die Stromquelle,

Fig. 5 ein Blockdiagramm für eine Pulsweitenmodulation während der Laufzeit,

Fig. 6 ein Flussdiagramm für eine dynamische Totzeitregelung.

Die Erfindung ist im Nachfolgenden beispielhaft anhand eines Antriebs mit B6-Schaltung und einem dreiphasigen Elektromotor mit Sternschaltung erläutert. Die Erfindung kann jedoch auch auf andere Anordnungen angewendet werden.

Insbesondere sind die nachfolgenden Ausführungen sinngemäß auch auf eine Dreiecksschaltung und/oder generell mehrphasige Elektromotoren übertragbar.

Einander entsprechende Teile und Größen sind in allen Figuren stets mit den gleichen Bezugszeichen versehen.

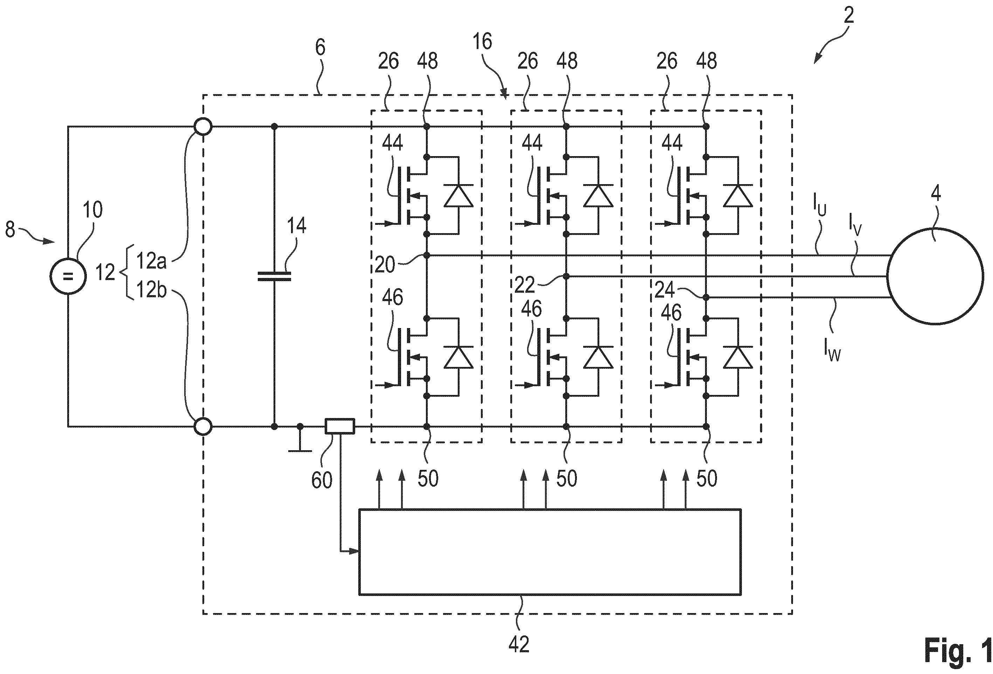

Die Fig. 1 zeigt eine elektrische Maschine 2 für einen elektromotorischen Antrieb eines nicht näher dargestellten Fahrzeugs, beispielsweise eines Kraftfahrzeugs oder eines elektrisch angetriebenen oder antreibbaren Fahrrads (E-Bike). Die Maschine 2 umfasst hierbei einen dreiphasigen bürstenlosen Elektromotor 4, welcher mittels eines Stromrichters (Umrichter, Wechselrichter) 6 an eine Stromquelle (Spannungsversorgung) 8 angeschlossen ist. Die Stromquelle 8 umfasst in diesem Ausführungsbeispiel einen fahrzeuginternen Energiespeicher in Form einer (Kraftfahrzeug-)Batterie 10, sowie einen damit verbundenen (Gleichspannungs-)Zwischenkreis 12 als Teil eines Bordnetzes, welcher sich zumindest teilweise in den Stromrichter 6 erstreckt.

Der Zwischenkreis 12 ist im Wesentlichen durch eine Hinleitung (Versorgungsleitung) 12a und eine Rückleitung (Masseleitung) 12b gebildet, mittels welchen der Stromrichter 6 an die Batterie 10 angeschlossen ist. Die Leitungen 12a und 12b sind zumindest teilweise in den Stromrichter 6 geführt, in welchen zwischen diesen ein Zwischenkreiskondensator 14 sowie eine Brückenschaltung 16 verschaltet sind.

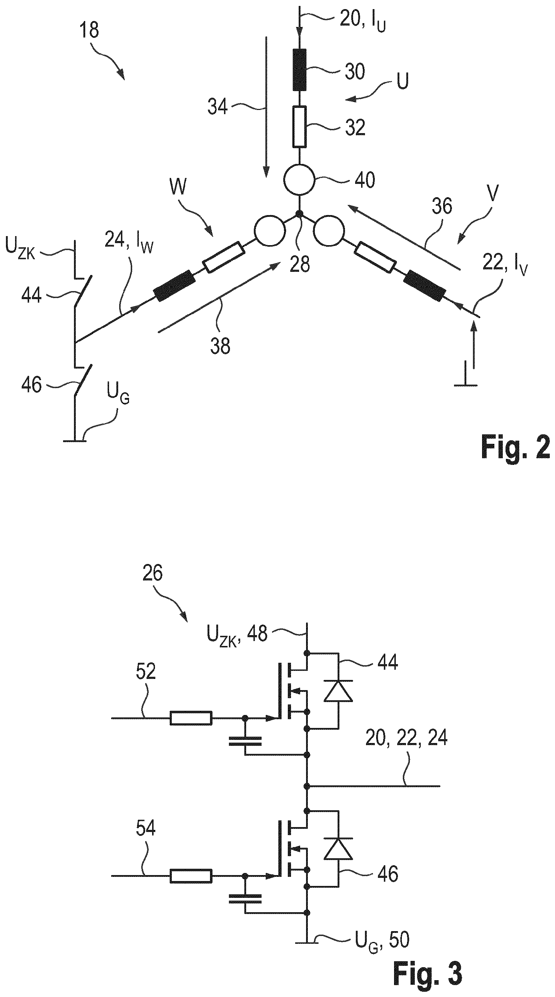

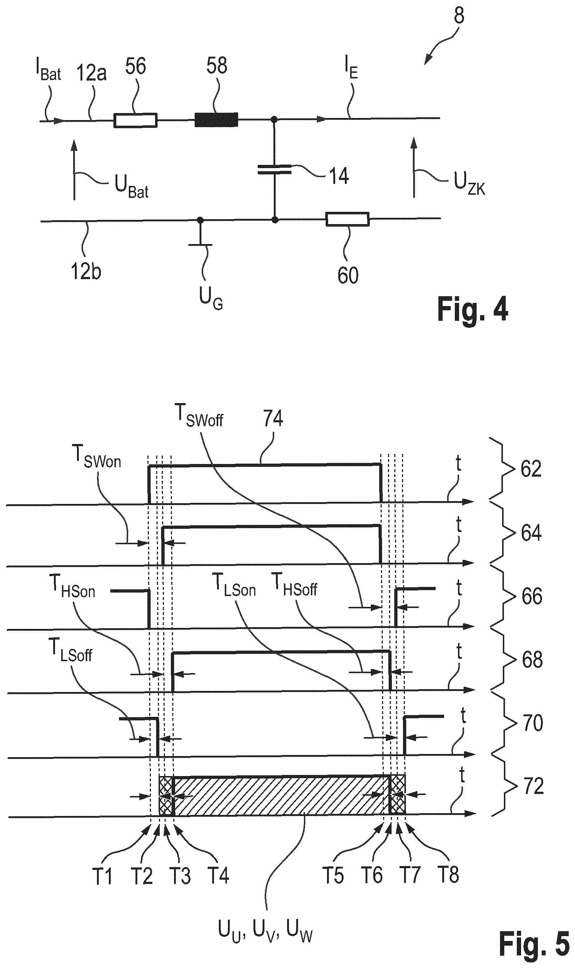

Im Betrieb der Maschine 2 wird ein der Brückenschaltung 16 zugeführter Eingangsstrom $I_E$ (Fig. 4) in einen dreiphasigen Ausgangsstrom (Motorstrom, Drehstrom) $I_U$, Iv, Iwfür die drei Phasen U, V, W des Elektromotors 4 gewandelt. Die nachfolgend auch als Phasenströme bezeichneten Ausgangsströme $I_U$, Iv, Iw werden an die entsprechenden Phasen(-wicklungen) U, V, W (Fig. 2) eines nicht näher dargestellten Stators geführt.

In der Fig. 2 ist eine Sternschaltung 18 der drei Phasenwicklungen U, V, W dargestellt. Die Phasenwicklungen U, V und W sind mit jeweils einem (Phasen-)Ende 20, 22, 24 an ein jeweiliges Brückenmodul 26 (Fig. 3) der Brückenschaltung 16 geführt, und mit dem jeweils gegenüberliegenden Ende in einem Sternpunkt 28 als gemeinsamen Verbindungsanschluss miteinander verschaltet. In der Darstellung der Fig. 2 sind die Phasenwicklungen U, V und W jeweils mittels eines Ersatzschaltbildes in Form einer Induktivität 30 und eines ohmschen Widerstandes 32 sowie einem jeweiligen Spannungsabfall 34, 36, 38 gezeigt.

Die jeweils über die Phasenwicklung U, V, W abfallende Spannung 34, 36, 38 ist schematisch durch Pfeile repräsentiert und ergibt sich aus der Summe der Spannungsabfälle über der Induktivität 30 und dem ohmschen Widerstand 32 sowie der induzierten Spannung 40. Die durch eine Bewegung eines Rotors des Elektromotors 4 induzierte Spannung 40 (elektromagnetische Kraft, EMK, EMF) ist in der Fig. 2 anhand eines Kreises dargestellt.

Die Ansteuerung der Sternschaltung 18 erfolgt mittels der Brückenschaltung 16. Die Brückenschaltung 16 ist mit den nachfolgend auch als Brückenzweigen oder Halbbrücken bezeichneten Brückenmodulen 26 insbesondere als eine B6-Schaltung ausgeführt. In dieser Ausgestaltungsform wird im Betrieb an jede der Phasenwicklungen U, V, W in hoher Schaltfrequenz getaktet zwischen einem hohen (Gleich-)Spannungsniveau der Hinleitung 12a und einem niedrigen Spannungsniveau der Rückleitung 12b umgeschaltet.

Das hohe Spannungsniveau (High-Side-Spannungsniveau, HS-Spannungsniveau, positive Versorgungsspannung) ist hierbei insbesondere eine Zwischenkreisspannung $U_{ZK}$ des Zwischenkreises 12, wobei das niedrige Spannungsniveau (Low-Side-Spannungsniveau, LS-Spannungsniveau, negative Versorgungsspannung) vorzugsweise ein Erdpotential (Masse) $U_G$ ist. Diese getaktete Ansteuerung ist als eine - in Fig. 1 mittels Pfeilen dargestellte - PWM-Ansteuerung durch einen Controller 42 ausgeführt, mit welcher eine Steuerung und/oder Regelung der Drehzahl, der Leistung sowie der Drehrichtung des Elektromotors 4 möglich ist.

Die Brückenzweige 26 umfassen jeweils zwei Halbleiterschalter 44 und 46, welche in der Fig. 2 lediglich schematisch und beispielhaft für die Phase W dargestellt sind. Das Brückenmodul 26 ist einerseits mit einem Potentialanschluss 48 an die Hinleitung 12a und somit an die Zwischenkreisspannung $U_{ZK}$ angeschlossen. Andererseits ist das Brückenmodul 26 mit einem zweiten Potentialanschluss 50 an die Rückleitung 12b und somit an das Erdpotential $U_G$ kontaktiert. Über die Halbleiterschalter 44, 46 ist das jeweilige Phasenende 20, 22, 24 der Phase U, V, W entweder mit der Zwischenkreisspannung $U_{ZK}$ oder mit dem Erdpotential $U_G$ verbindbar. Der Halbleiterschalter 44 ist nachfolgend auch als High-Side-Schalter (HS-Schalter) 44 und der Halbleiterschalter 46 als Low-Side-Schalter (LS-Schalter) 46 bezeichnet.

Wird der HS-Schalter 44 geschlossen (leitend) und der LS-Schalter 46 geöffnet (nichtleitend, sperrend), so ist das Phasenende 20, 22, 24 mit dem Potential der Zwischenkreisspannung $U_{ZK}$ verbunden. Entsprechend ist bei einem Öffnen des HS-Schalters 44 und einem Schließen des LS-Schalters 46 die Phase U, V, W mit dem Erdpotential $U_G$ kontaktiert. Dadurch ist es mittels der PWM-Ansteuerung möglich, jede Phasenwicklung U, V, W mit zwei unterschiedlichen Spannungsniveaus zu beaufschlagen.

In der Fig. 3 ist ein einzelner Brückenzweig 26 vereinfacht dargestellt. In diesem Ausführungsbeispiel sind die Schalter 44 und 46 als MOSFETs (metal-oxide semiconductor field-effect transistor) realisiert, die jeweils mittels der PWM-Ansteuerung zwischen einem durchgeschalteten Zustand auf und einem sperrenden Zustand getaktet umschalten. Hierzu sind die jeweiligen Gateanschlüsse an entsprechende Steuerspannungseingänge 52, 54 geführt, mittels welcher die Signale der PWM-Ansteuerung des Controllers 42 übertragen werden.

Die Fig. 4 zeigt ein Ersatzschaltbild für die Stromquelle 8. Im Betrieb erzeugt die Batterie 10 eine Batteriespannung $U_{Bat}$ sowie einen entsprechenden Batteriestrom $I_{Bat}$ zum Betrieb des Stromrichters 6. In der Fig. 4 ist der Innenwiderstand der Batterie 10 als ein ohmscher Widerstand 56 und eine Eigeninduktivität der Batterie 10 als eine Induktivität 58 dargestellt. In der Rückleitung 12b ist ein Shuntwiderstand 60 geschaltet.

Abhängig von den Schaltzuständen der Schalter 44, 46 fließt der Phasenstrom $I_U$, Iv, Iw über den Shuntwiderstand 60. Der Spannungsabfall über dem Shuntwiderstand 60 wird verstärkt und ausgewertet. Mit Messungen und dem Kenntnisstand der Schaltzustände der Schalter 44, 46 werden die Phasenströme $I_U$, Iv, Iw von dem Controller 42 rekonstruiert. Es können auch andere Messmethoden zur Ermittlung der Motorströme verwendet werden (z. B. direkte Phasenstrommessung). Zusammen mit den gemessenen und/oder berechneten Phasenspannungen (Uu, Uv, Uw) stehen dem Controller 42 die Phasenspannungen (Uu, Uv, Uw) und die Phasenströme $I_U$, Iv, Iw zur Verfügung.

Das Diagramm der Fig. 5 umfasst sechs horizontale, übereinander angeordnete Abschnitte 62, 64, 66, 68, 70, 72. Horizontal, das bedeutet auf der X- oder Abszissenachse, ist jeweils eine Zeit t aufgetragen. Beispielhaft ist in der Fig. 5 zwei Umschaltvorgänge, mit jeweils einem Einschaltvorgang und einem Ausschaltvorgang, für eine PWM-Ansteuerung eines Brückenzweiges 26 dargestellt.

Der Abschnitt 62 zeigt hierbei ein Ausgangssignal des Controllers 42 zur Ansteuerung der Schalter 44, 46. Dieses Ausgangssignal wird beispielsweise einem PWM-Treiber zugeführt, welcher entsprechende Steuersignale für die Steuerspannungseingänge 52, 54 erzeugt. Der Abschnitt 64 zeigt hierbei das Steuerspannungssignal für den HS-Schalter 44, also das HS-Steuereingangssignal oder HS-Gatesignal. Der Abschnitt 66 zeigt das komplementäre Steuerspannungssignal für den LS-Schalter 46, also das LS-Steuereingangssignal oder LS-Gatesignal. Die Abschnitte 68, 70 zeigen den tatsächlichen oder realen Schaltzustand des HS-Schalters 44 (Abschnitt 68) und des LS-Schalters 46 (Abschnitt 70). In dem Abschnitt 72 ist der zeitliche Verlauf der resultierenden Phasenspannung Uu, Uv, Uw der jeweils angesteuerten Phase U, V, W dargestellt.

Nachfolgend ist zunächst ein Einschaltvorgang erläutert, bei welchem die Schalter 44, 46 derart gesteuert oder geschaltet werden, dass der Elektromotor 4 mit der Phasenspannung Uu, Uv, Uw versorgt wird.

Zu dem Schaltzeitpunkt T1 wird der Einschaltvorgang von dem Controller 42 gestartet. Der Abschnitt 62 zeigt ein rechteckförmiges Schaltsignal 74, welches vom Controller 42 zur PWM-Ansteuerung der Schalter 44, 46 erzeugt wird. Das Schaltsignal (Edge) 74 weist zwei Schaltflanken von einem niedrigen zu einem hohen Spannungsniveau (steigende Flanke, engl.: rising edge) und von dem hohen zu dem niedrigen Spannungsniveau (fallende Flanke, engl.: falling edge) auf. Die steigende Flanke wird zu dem Schaltzeitpunkt T1 und die fallende Flanke zu einem späteren Schaltzeitpunkt T5 gestartet.

Zeitgleich oder mit geringer Verzögerung zu dem Schaltzeitpunkt T1 schaltet der Treiberausgang des LS-Schalters 46 auf Low um ihn zu deaktivieren (Abschnitt 66). Bei einem Schaltzeitpunkt T2 ist der LS-Schalter 46 ausgeschaltet (Abschnitt 70). Die hardwarebedingte Zeitverzögerung zwischen der Deaktivierung und dem Ausschalten des LS-Schalters 46 ist nachfolgend auch als Hardware-Totzeit $T_{LSoff}$ bezeichnet. Die Hardware-Totzeit $T_{LSoff}$ ist hierbei durch die Differenz der Schaltzeitpunkte T2 und T1 gegeben ($T_{LSoff}$ = T2 - T1).

Je nach Stromrichtung fließt der Strom über die (integrierte oder parasitäre) Freilaufdiode des HS- oder LS-Schalters 44, 46. Unter Vernachlässigung der Diodenspannung ergibt sich je nach Stromrichte die positive oder negative Versorgungsspannung an der Phase U, V, W.

Zu einem Schaltzeitpunkt T3 schaltet der Treiberausgang des HS-Schalters 44 auf High um ihn zu aktivieren. Hierzu ist in dem Controller 42 eine Software-Totzeit $T_{SWon}$ hinterlegt. Der Schaltzeitpunkt T3 ist hierbei durch die Summe aus dem auslösenden Schaltzeitpunkt T1 und der Software-Totzeit $T_{SWon}$ gegeben, T3 = T1 + $T_{SWon}$. Mit anderen Worten ist der Schaltzeitpunkt T3 um die Software-Totzeit $T_{SWon}$ gegenüber dem Schaltzeitpunkt T1 verzögert. Der Treiberausgang des HS-Schalters 44 wird also zeitverzögert gegenüber dem Treiberausgang des LS-Schalters 46 angesteuert. Die Software-Totzeit $T_{SWon}$ ist stets derart dimensioniert, dass der Schaltzeitpunkt T3 nach dem Schaltzeitpunkt T2 liegt, also dass der LS-Schalter 46 nicht-leitend geschaltet ist bevor der HS-Schalter 44 leitend geschaltet wird. Durch die Software-Totzeit $T_{SWon}$ ist somit sichergestellt, dass die Schalter 44, 46 nicht gleichzeitig leitend geschaltet sind.

Anschließend wird der HS-Schalter 44 zu einem Schaltzeitpunkt T4 eingeschaltet. Der Schaltzeitpunkt T4 ist aufgrund einer hardwarebedingten Verzögerung nach dem Schaltzeitpunkt T3 angeordnet. Die Verzögerung ist nachfolgend auch als Hardware-Totzeit $T_{HSon}$ bezeichnet, und ist durch die Differenz der Schaltzeitpunkt T4 und T4 gegeben, $T_{HSon}$ = T4 - T3. Ab dem Schaltzeitpunkt T4 fließt ein Strom durch den HS-Schalter 44 zu dem Elektromotor 4.

Der Einschaltvorgang weist somit eine Software-Totzeit $T_{SWon}$ und zwei Hardware-Totzeiten $T_{LSoff}$, $T_{HSon}$ auf. Die Totzeit zwischen dem Ausschalten des LS-Schalters 46 (Schaltzeitpunkt T2) und dem Einschalten des HS-Schalters 44 (Schaltzeitpunkt T4), also die Totzeit für das Umschalten oder den Umschaltprozess, ist hierbei gegeben aus der Summe der Software-Totzeit $T_{SWon}$ und der Hardware-Totzeit $T_{HSon}$ abzüglich der Hardware-Totzeit $T_{LSoff}$.

Nachfolgend ist weiterhin ein Ausschaltvorgang erläutert, bei welchem die Schalter 44, 46 derart gesteuert oder geschaltet werden, dass der Elektromotor 4 nicht mehr mit der Phasenspannung Uu, Uv, Uw versorgt wird.

Zu dem Schaltzeitpunkt T5 wird der Ausschaltvorgang von dem Controller 42 durch die fallende Flanke des Schaltsignals 74 gestartet.

Zeitgleich oder mit geringer Verzögerung zu dem Schaltzeitpunkt T5 schaltet der Treiberausgang des HS-Schalters 444 auf Low um ihn zu deaktivieren (Abschnitt 64). Bei einem Schaltzeitpunkt T6 ist der HS-Schalter 44 ausgeschaltet (Abschnitt 68). Die hardwarebedingte Zeitverzögerung zwischen der Deaktivierung und dem Ausschalten des HS-Schalters 44 ist nachfolgend auch als Hardware-Totzeit $T_{HSoff}$ bezeichnet. Die Hardware-Totzeit $T_{HSoff}$ ist hierbei durch die Differenz der Schaltzeitpunkte T6 und T5 gegeben, $T_{HSoff}$ = T6 - T5.

Zu einem Schaltzeitpunkt T7 schaltet der Treiberausgang des LS-Schalters 46 auf High um ihn zu aktivieren. Hierzu ist in dem Controller 42 eine Software-Totzeit $T_{SWoff}$ hinterlegt. Der Schaltzeitpunkt T7 ist hierbei durch die Summe aus dem auslösenden Schaltzeitpunkt T5 und der Software-Totzeit $T_{SWoff}$ gegeben, T7 = T5 + $T_{SWoff}$. Mit anderen Worten ist der Schaltzeitpunkt T7 um die Software-Totzeit $T_{SWoff}$ gegenüber dem Schaltzeitpunkt T5 verzögert. Der Treiberausgang des LS-Schalters 46 wird also zeitverzögert gegenüber dem Treiberausgang des HS-Schalters 44 angesteuert. Die Software-Totzeit $T_{SWoff}$ ist stets derart dimensioniert, dass der Schaltzeitpunkt T7 nach dem Schaltzeitpunkt T6 liegt, also dass der HS-Schalter 44 nicht-leitend geschaltet ist bevor der LS-Schalter 46 leitend geschaltet wird. Durch die Software-Totzeit $T_{SWoff}$ ist somit sichergestellt, dass die Schalter 44, 46 nicht gleichzeitig leitend geschaltet sind.

Anschließend wird der LS-Schalter 46 zu einem Schaltzeitpunkt T8 eingeschaltet. Der Schaltzeitpunkt T8 ist aufgrund einer hardwarebedingten Verzögerung nach dem Schaltzeitpunkt T7 angeordnet. Die Verzögerung ist nachfolgend auch als Hardware-Totzeit $T_{LSon}$ bezeichnet, und ist durch die Differenz der Schaltzeitpunkt T8 und T7 gegeben, $T_{LSon}$ = T8 - T7. Ab dem Schaltzeitpunkt T8 fließt ein Strom durch den LS-Schalter 46 zu dem Elektromotor 4.

Der Ausschaltvorgang weist somit eine Software-Totzeit $T_{SWoff}$ und zwei Hardware-Totzeiten $T_{HSoff}$, $T_{HSoff}$ auf. Die Totzeit zwischen dem Ausschalten des HS-Schalters 44 (Schaltzeitpunkt T6) und dem Einschalten des LS-Schalters 46 (Schaltzeitpunkt T8), also die Totzeit für das Umschalten oder den Umschaltprozess, ist hierbei gegeben aus der Summe der Software-Totzeit $T_{SWoff}$ und der Hardware-Totzeit $T_{LSon}$ abzüglich der Hardware-Totzeit $T_{HSoff}$.

Die Hardware-Totzeiten $T_{HSon}$, $T_{HSoff}$, $T_{LSon}$, $T_{LSoff}$ variieren im Betrieb und können für die unterschiedlichen Brückenzweige 26 unterschiedliche Werte aufweisen. Entsprechend können auch die Software-Totzeiten $T_{SWon}$, $T_{SWoff}$ unterschiedliche Werte für die unterschiedlichen Brückenzweige 26 aufweisen.

Nachfolgend ist ein erfindungsgemäßes Verfahren zum Betrieb des Elektromotors 4 näher erläutert.

Verfahrensgemäß werden mit Hilfe einer Messeinrichtung während der Laufzeit von dem Controller 42 die die jeweilige Totzeit charakterisierenden Schaltzeitpunkte T2, T4, T6 und T8 ermittelt. Je nach Stromrichtung können T2 und T8 oder T4 und T6 ermittelt werden. Anhand der Schaltzeitpunkte T2, T4, T6 und T8 sowie den hinterlegten Software-Totzeiten $T_{SWon}$, $T_{SWoff}$ können die Schaltzeiten beziehungsweise die sich verändernden Hardware-Totzeiten $T_{HSon}$, $T_{HSoff}$, $T_{LSon}$, $T_{LSoff}$ für die Schalter 44, 46 bestimmt werden, und somit die Software-Totzeiten $T_{SWon}$, $T_{SWoff}$ verändert, vorzugsweise minimiert, werden. Existiert zudem ein Erwartungswert für die Stromrichtung, so kann auch T1 und T4 angepasst werden um ein gewünschtes Schaltverhalten beziehungsweise eine gewünschte Pulsdauer für die erzeugte Phasenspannung Uu, Uv, Uw zu erzielen.

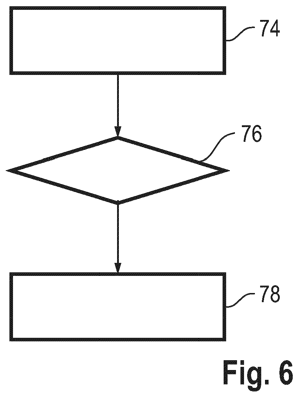

In dem in Fig. 6 gezeigten Ausführungsbeispiel werden in einem Verfahrensschritt 74 die Schaltzeitpunkte T2, T4, T6 und T8 gemessen oder erfasst. In einem Verfahrensschritt 76 wird anhand der erfassten Schaltzeitpunkte ein Schwellwertvergleich mit einem Schwellwert durchgeführt, und in Abhängigkeit des Schwellwert-Vergleichs in einem Verfahrensschritt 78 die Software-Totzeit $T_{SWon}$, $T_{SWoff}$ verändert. Insbesondere wird die Software-Totzeit $T_{SWon}$, $T_{SWoff}$ hierbei anhand des Schwellwertvergleichs geregelt, insbesondere minimiert.

In einer möglichen Anwendung, wird mittels der Regelung der Software-Totzeit $T_{SWon}$, $T_{SWoff}$ eine Totzeitkompensation oder Totzeitoptimierung im PWM-Betrieb realisiert. Hierzu wird aus den erfassten Schaltzeitpunkten T2, T4, T6 und T8 eine Ist-Totzeitdauer (T4 - T2, T8 - T6) bestimmt, und ein Schwellwertvergleich der Ist-Totzeitdauer mit einer hinterlegten Soll-Totzeitdauer, insbesondere einer Minimaltotzeit, durchgeführt. In Abhängigkeit des Schwellwertvergleichs wird die Software-Totzeit $T_{SWon}$, $T_{SWoff}$ verändert oder geregelt. Insbesondere wird die Software-Totzeit $T_{SWon}$, $T_{SWoff}$ hierbei minimiert.

In einer weiteren möglichen Anwendung wird die Einstellung der Software-Totzeit $T_{SWon}$, $T_{SWff}$ dazu genutzt oder verwendet, die Ist-Pulsdauer an eine Soll-Pulsdauer anzupassen. Hierzu wird anhand der erfassten Schaltzeitpunkten T2, T4, T6 und T8 eine Ist-Pulsdauer (T6-T4) für einen Signalpuls der Pulsweitenmodulation (Abschnitt 72) bestimmt. Anschließend wird ein Schwellwertvergleich der Ist-Pulsdauer mit einer Soll-Pulsdauer durchgeführt. Die Soll-Pulsdauer ist hierbei der Schwellwert, wobei die Soll-Pulsdauer insbesondere diejenige Pulsdauer ist, welche von der Pulsweitenmodulation umgesetzt werden soll. Die Soll-Pulsdauer ist also die Pulsdauer des Schaltsignals 74 (T5-T1). Aufgrund der Hardware-Totzeiten $T_{HSon}$, $T_{HSoff}$, $T_{LSon}$, $T_{LSoff}$ kann die Ist-Pulsdauer (T6-T4) von der Soll-Pulsdauer (T5-T1) abweichen. Anhand des Schwellwertvergleichs wird in dem Verfahrensschritt 78 beispielsweise der Schaltzeitpunkt T1 angepasst und/oder durch Veränderung der Software-Totzeit $T_{SWon}$ der Schaltzeitpunkt T4 derart variiert oder geregelt, dass die Ist-Pulsdauer der Soll-Pulsdauer entspricht.

Zur Ermittlung oder Messung der Schaltzeitpunkte T2, T4, T6 und T8sind verschiedene Möglichkeiten oder Variationen denkbar.

In einer ersten Ausführung werden zur Erfassung eines Schaltzeitpunkts T2, T4, T6, T8 beispielsweise ein freilaufender Zeitgeber (Timer) des Controllers 42 und eine Referenzgröße verwendet, wobei ein Zählerstand des Zeitgebers kopiert und ausgewertet wird, wenn eine gemessene Motorgröße des Elektromotors 4 das Niveau der Referenzgröße kreuzt. Die Motorgröße ist hierbei insbesondere die erzeugte Phasenspannung Uu, Uv, Uw für den Elektromotor 4, wobei die Referenzgröße eine entsprechende Referenzspannung ist. Die Referenzspannung ist beispielsweise die Hälfte der Summe aus der positiven und negativen Versorgungsspannung. Kreuzt die Phasenspannung die Referenzspannung, so wird der Zählerstand des freilaufenden Zeitgebers kopiert und anschließend ausgewertet.

In einer weiteren Ausführung wird eine analoge Messung der Motorgröße durchgeführt. Hierzu wird insbesondere eine iterative Erfassung oder Messung eines Schaltzeitpunkts T2, T4, T6, T8 durchgeführt, indem zu einem erwarteten Schaltzeitpunkt T2, T4, T6, T8 eine Motorgröße des Elektromotors 4 gemessen wird, und in Abhängigkeit davon der Schaltzeitpunkt T2, T4, T6, T8 oder Messzeitpunkt verändert wird.

Bei einer analogen Phasenspannungsmessung wird somit zu dem erwarteten Schaltzeitpunkt T2, T4, T6, T8 die Phasenspannung Uu, Uv, Uw gemessen, und je nach Messwert die Schaltzeit angepasst. Entsprechend wird bei einer analogen Phasenstrommessung der Phasenstrom $I_U$, Iv, Iw zu dem erwarteten Schaltzeitpunkt T2, T4, T6, T8 gemessen, und je nach Messwert die Schaltzeit angepasst.

Alternativ zu einer einzelnen Messung in den vorherigen Varianten können auch Mehrfachmessungen je Schaltvorgang erfolgen.

Da der Schaltvorgang kontinuierlich erfolgt, kann in einer möglichen Weiterbildung auch der Schwellwert auf dem geregelt wird variiert werden.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

Bezugszeichenliste

| | |
|---|---|
| 2 | elektrische Maschine |
| 4 | Elektromotor |
| 6 | Stromrichter |
| 8 | Stromquelle |
| 10 | Batterie |
| 12 | Zwischenkreis |
| 12a | Hinleitung |
| 12b | Rückleitung |
| 14 | Zwischenkreiskondensator |
| 16 | Brückenschaltung |
| 18 | Sternschaltung |
| 20, 22, 24 | Phasenende |
| 26 | Brückenmodul, Brückenzweig |
| 28 | Sternpunkt |
| 30 | Induktivität |
| 32 | Widerstand |
| 34, 36, 38 | Spannung |
| 40 | Spannung |

| 42 | Controller |
| 44 | High-Side-Schalter, Halbleiterschalter |
| 46 | Low-Side-Schalter, Halbleiterschalter |
| 48, 50 | Potentialanschluss |
| 52, 54 | Steuerspannungseingang |
| 56 | Widerstand |
| 58 | Induktivität |
| 60 | Shuntwiderstand |
| 62, 64, 66, 68, 70, 72 | Abschnitt |

| IE | Eingangsstrom |
| $I_U$, $I_V$, $I_W$ | Phasenstrom |
| $U_U$, $U_V$, $U_W$ | Phasenspannung |
| U, V, W | Phase |
| $U_{ZK}$ | Zwischenkreisspannung |
| $U_G$ | Erdpotential |
| $U_{Bat}$ | Batteriespannung |
| $I_{Bat}$ | Batteriestrom |
| T1, T2, T3, T4, T5, T6, T7, T8 | Schaltzeitpunkt |
| $T_{LSoff}$, $T_{HSon}$, $T_{HSoff}$, $T_{LSon}$ | Hardware-Totzeit |
| $T_{SWon}$, $T_{SWoff}$ | Software-Totzeit |

**Patentansprüche**

1. Verfahren zum Betreiben eines pulsweitenmodulierten Elektromotors (4), bei welchem im Zuge der Pulsweitenmodulation zumindest ein Brückenzweig (26) mit einem High-Side-Schalter (44) und mit einem Low-Side-Schalter (46) angesteuert wird, und bei welchem zwischen einem Ausschaltvorgang des einen Schalters (44, 46) und einem Einschaltvorgang des anderen Schalters (46, 44) eine Totzeit vorgesehen ist, welche sich aus einer sich im Motorbetrieb verändernden Hardware-Totzeitdauer ($T_{LSoff}$, $T_{HSon}$, $T_{HSoff}$, $T_{LSon}$) und einer einstellbaren Software-Totzeitdauer ($T_{SWon}$, $T_{SWoff}$) zusammensetzt,

- wobei die Schaltzeitpunkte (T2, T4, T6, T8) für die die Totzeit begrenzenden Schaltvorgänge erfasst werden,
- wobei in Abhängigkeit der erfassten Schaltzeitpunkte (T2, T4, T6, T8) die Software-Totzeit ($T_{SWon}$, $T_{SWoff}$) verändert wird.

2. Verfahren nach Anspruch 1,
**dadurch gekennzeichnet,**

- **dass** anhand der erfassten Schaltzeitpunkte (T2, T4, T6, T8) ein Schwellwertvergleich mit einem Schwellwert durchgeführt wird, und
- **dass** die Software-Totzeit ($T_{SWon}$, $T_{SWoff}$) in Abhängigkeit des Schwellwertvergleichs verändert wird.

3. Verfahren nach Anspruch 1 oder 2,
**dadurch gekennzeichnet,**
**dass** die Software-Totzeit ($T_{SWon}$, $T_{SWoff}$) minimiert wird.

4. Verfahren nach einem der Ansprüche 1 bis 3,
**dadurch gekennzeichnet,**

- **dass** aus den erfassten Schaltzeitpunkten (T2, T4, T6, T8) eine Ist-Totzeitdauer bestimmt wird,
- **dass** ein Schwellwertvergleich der Ist-Totzeitdauer mit einer Soll-Totzeitdauer durchgeführt wird, und
- **dass** die Software-Totzeit ($T_{SWon}$, $T_{SWoff}$) in Abhängigkeit des Vergleichs verändert wird.

5. Verfahren nach einem der Ansprüche 1 bis 3,
**dadurch gekennzeichnet,**

- **dass** anhand der erfassten Schaltzeitpunkten (T2, T4, T6, T8) von aufeinanderfolgenden Ein- und Ausschaltvorgängen eine Ist-Pulsdauer für einen Signalpuls der Pulsweitenmodulation bestimmt wird,

- **dass** ein Schwellwertvergleich der Ist-Pulsdauer mit einer Soll-Pulsdauerdurchgeführt wird, und
- **dass** die Software-Totzeit ($T_{SWon}$, $T_{SWoff}$) in Abhängigkeit des Vergleichs verändert wird.

6. Verfahren nach einem der Ansprüche 1 bis 5,
   **dadurch gekennzeichnet,**
   **dass** zur Erfassung eines Schaltzeitpunkts (T2, T4, T6, T8) ein freilaufender Zeitgeber und eine Referenzgröße verwendet werden, wobei ein Zählerstand des Zeitgebers kopiert und ausgewertet wird, wenn eine gemessene Motorgröße ($I_U$, Iv, Iw, Uu, Uv, Uw) des Elektromotors (4) das Niveau der Referenzgröße kreuzt.

7. Verfahren nach einem der Ansprüche 1 bis 5,
   **dadurch gekennzeichnet,**
   **dass** eine Erfassung eines Schaltzeitpunkts (T2, T4, T6, T8) iterativ durchgeführt wird, indem zu einem erwarteten Schaltzeitpunkt eine Motorgröße ($I_U$, Iv, Iw, Uu, Uv, Uw) des Elektromotors (4) gemessen wird, und in Abhängigkeit davon der Schaltzeitpunkt (T2, T4, T6, T8) verändert wird.

8. Verfahren nach einem der Ansprüche 2 bis 7,
   **dadurch gekennzeichnet,**
   **dass** der Schwellwert variiert wird.

9. Elektrische Maschine (2), aufweisend einen Elektromotor (4), eine diesen ansteuernde Brückenschaltung (16) mit mindestens einem Brückenzweig (26), und einen Controller (42) zur Durchführung eines Verfahrens nach einem der Ansprüche 1 bis 8.

10. Software auf einem Datenträger zur Durchführung eines Verfahrens nach einem der Ansprüche 1 bis 8, wenn die Software auf einem Computer abläuft.

Fig. 1

**Fig. 2**

**Fig. 3**

**Fig. 4**

**Fig. 5**

74

76

78

Fig. 6

Europäisches
Patentamt

European
Patent Office

Office européen
des brevets

## EUROPÄISCHER RECHERCHENBERICHT

Nummer der Anmeldung

EP 25 16 9964

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2019 111493 A1 (THYSSENKRUPP AG [DE]; THYSSENKRUPP PRESTA AG [LI]) 5. November 2020 (2020-11-05) | 1-4,6-10 | INV. H02P6/15 H02M1/38 |
| Y | * Absatz [0018] - Absatz [0031]; Abbildungen 2-3 * * Absatz [0005] - Absatz [0016] * ----- | 5 | H02P23/14 H02P27/08 |
| Y | US 2008/097260 A1 (TSUKADA DAISUKE [JP] ET AL) 24. April 2008 (2008-04-24) * Absatz [0053] - Absatz [0055] * ----- | 5 | |
| Y | US 2023/223834 A1 (MIKI TAKAYOSHI [JP] ET AL) 13. Juli 2023 (2023-07-13) * Absatz [0037] - Absatz [0052]; Abbildungen 1-2 * ----- | 5 | |

RECHERCHIERTE SACHGEBIETE (IPC)

H02P
H02M

Der vorliegende Recherchenbericht wurde für alle Patentansprüche erstellt

| Recherchenort | Abschlußdatum der Recherche | Prüfer |
|---|---|---|
| München | 17. Juli 2025 | Landi, Matteo |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 25 16 9964

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2025

| Im Recherchenbericht angeführtes Patentdokument | Datum der Veröffentlichung | Mitglied(er) der Patentfamilie | Datum der Veröffentlichung |
|---|---|---|---|
| DE 102019111493 A1 | 05-11-2020 | CN 113785483 A | 10-12-2021 |
|  |  | DE 102019111493 A1 | 05-11-2020 |
|  |  | EP 3963702 A1 | 09-03-2022 |
|  |  | WO 2020225059 A1 | 12-11-2020 |
| US 2008097260 A1 | 24-04-2008 | CN 101040430 A | 19-09-2007 |
|  |  | HK 1107614 A1 | 11-04-2008 |
|  |  | JP 4259448 B2 | 30-04-2009 |
|  |  | JP 2006110037 A | 27-04-2006 |
|  |  | KR 20070070201 A | 03-07-2007 |
|  |  | US 2008097260 A1 | 24-04-2008 |
|  |  | WO 2006041112 A1 | 20-04-2006 |
| US 2023223834 A1 | 13-07-2023 | DE 112020007328 T5 | 30-03-2023 |
|  |  | JP 7214052 B2 | 27-01-2023 |
|  |  | JP WO2021255850 A1 | 23-12-2021 |
|  |  | US 2023223834 A1 | 13-07-2023 |
|  |  | WO 2021255850 A1 | 23-12-2021 |

EPO FORM P0461

Für nähere Einzelheiten zu diesem Anhang : siehe Amtsblatt des Europäischen Patentamts, Nr.12/82